(19) Europäisches Patentamt
European Patent Office
Office européen des brevets

(11) EP 2 190 943 B1

(12) # FASCICULE DE BREVET EUROPEEN

(45) Date de publication et mention de la délivrance du brevet:
**09.11.2016 Bulletin 2016/45**

(21) Numéro de dépôt: **08834758.8**

(22) Date de dépôt: **10.09.2008**

(51) Int Cl.:
***C09K 8/584*** *(2006.01)* ***C09K 8/588*** *(2006.01)*
***E21B 43/22*** *(2006.01)*

(86) Numéro de dépôt international:
**PCT/FR2008/051611**

(87) Numéro de publication internationale:
**WO 2009/044075 (09.04.2009 Gazette 2009/15)**

(54) **PROCÉDÉ PERFECTIONNÉ DE RÉCUPÉRATION ASSISTÉE DE PÉTROLE**
VERBESSERTES VERFAHREN ZUR ERHÖHTEN ÖLGEWINNUNG
IMPROVED PROCESS FOR ENHANCED OIL RECOVERY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.09.2007 FR 0757478**

(43) Date de publication de la demande:
**02.06.2010 Bulletin 2010/22**

(73) Titulaire: **S.P.C.M. SA**
**42160 Andrézieux Bouthéon (FR)**

(72) Inventeurs:
- **FAVERO, Cédric**
**F-69700 Givors (FR)**
- **GAILLARD, Nicolas**
**F-69530 Brignais (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A-00/73623** **GB-A- 2 199 354**
**US-A- 4 814 096** **US-A- 5 071 934**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 190 943 B1

## Description

L'invention a pour objet un procédé perfectionné de récupération assistée de pétrole. Plus précisément, la présente invention concerne un procédé de récupération assisté du pétrole tel que défini dans la revendication 1.

La plupart des champs de pétrole actuellement exploités sont devenus matures et ont, de fait, amorcé le déclin de leur production ou sont sur le point de le faire. Le taux de récupération de ces champs est actuellement de l'ordre de 30 à 35% en moyenne. Ils offrent donc un potentiel de production encore considérable.

La récupération du pétrole brut contenu dans les gisements s'effectue de manière générale en plusieurs temps.

La production résulte d'abord de l'énergie naturelle des fluides et de la roche qui se décompriment. A l'issue de cette phase de déplétion, la quantité d'huile récupérée en surface représente en moyenne quelque 10 à 20 % de la réserve initiale. Il est donc nécessaire dans un deuxième temps d'employer des techniques visant à accroître le rendement de récupération. Plusieurs techniques ont été proposées.

*L'injection d'eau*

La méthode la plus fréquemment mise en oeuvre consiste à injecter de l'eau dans le gisement par le biais de puits injecteurs dédiés à cette fin. On parle alors de récupération secondaire. Cette dernière phase s'arrête lorsque la teneur en eau dans le mélange produit par les puits producteurs est trop importante. Le gain, ici, en terme de taux de récupération additionnelle est de l'ordre de 20%.

*L'addition de polymères hydrosolubles*

Hormis l'utilisation des méthodes thermiques, l'efficacité du balayage par injection d'eau est généralement améliorée par la réduction de la mobilité de l'eau obtenue par l'addition de polymères hydrosolubles.

*L'addition de polymères fonctionnels*

L'utilisation de polymère comportant des groupements fonctionnels tels que des chaînes pendantes hydrophobes en tant qu'agent destiné à augmenter la viscosité de l'eau d'injection est également bien connue. Cette technique est décrite dans le préambule du document US-A-4 814 096 et permet de disposer d'une phase aqueuse qui, de par sa viscosité élevée, a pour effet d'améliorer le balayage du réservoir et le déplacement de la phase huileuse. Dans ce document, il est indiqué que la présence du seul polymère présente malgré tout, un certain nombre d'inconvénients qui sont notamment une diminution de la viscosité en raison de la dégradation du polymère sous l'effet conjugué du cisaillement, de la température et des electrolytes présents dans l'eau d'injection. Pour pallier ce problème, il est proposé d'associer le polymère (aussi appelé associatif, ou selon leur structure polymère étoile ou polymère peigne) à un tensio-actif utilisé dans une proportion inférieure à celle du polymère, respectivement entre 100 et 10 000 ppm de polymère pour 1 à 100 ppm de tensio actif, ce qui a été qui a pour effet d'augmenter artificiellement la viscosité apparente de la solution. Compte tenu de la quantité élevée de polymère requise, cette technique a toutefois, pour inconvénient principal, le risque de modification de la perméabilité de la roche, ce qui jusqu'à maintenant a limité son développement.

En ce sens, le document GB-A-2199354 décrit un procédé de récupération assistée du pétrole dans lequel on associe un tensio-actif à un polymère comportant des monomères hydrophobes non ioniques.

*L'utilisation de composés tensio-actifs*

L'utilisation de composés tensioactifs en récupération assistée du pétrole a également été abondamment décrite. Dans ce cas, l'objectif est de diminuer la tension interfaciale entre l'eau et le pétrole et ainsi favoriser l'emulsification de l'huile (pétrole) dans la phase aqueuse. On n'est alors plus dans l'hypothèse précédente où la récupération se fait par augmentation de la viscosité de l'eau d'injection de manière à déplacer la phase huileuse. De très nombreux types d'agents tensio-actifs ont été proposés pour la récupération assistée du pétrole. Les agents tensio-actifs les plus couramment utilisés, pour des raisons de coût et de stabilité, sont du type sulfonate, sulfate et/ou carboxylate. Cependant, les quantités de composés tensioactifs nécessaires pour « solubiliser » efficacement le pétrole en place sont très élevées (proportion de 1 % à 10% en masse de la solution injectée, soit 1 à 5% du pétrole en place), ce qui n'est pas viable économiquement.

Pour palier à cet inconvénient majeur, une technique appelée ASP (= Alcalin / Surfactant / Polymère) a été mise au point. Elle requiert l'utilisation d'hydroxydes ou de carbonates de métal alcalino-terreux, habituellement combinés avec des polyacrylamides linéaires non associatifs, afin de permettre d'abaisser les concentrations de tensioactifs utilisées (de l'ordre de 0,1%). Cette technique nécessite, toutefois, une purification de l'eau d'injection, ce qui implique d'importantes contraintes techniques, industrielles et économiques. En effet, les ions divalents présents dans les saumures d'injection réagissent avec les alcalins pour former des précipités et doivent donc être retirés de l'eau d'injection pour éviter tout colmatage du réservoir.

*La microémulsification d'huile*

Les expériences de microémulsification d'huile par des tensioactifs sont aussi bien connues. Ces expériences permettent d'établir un lien direct entre la tension interfaciale et le comportement de la microémulsion. Cependant pour obtenir cette microémulsion, des quantités élevées de tensioactifs, de co-solvants et de co-tensioactifs sont nécessaires. La présence de co-solvant a pour but d'éviter la précipitation des tensio-actifs en milieu salin. Lors de ces expériences, la plus faible teneur en tensioactif permettant d'obtenir une microémulsion est de 0.75% en poids, ce qui reste très élevé comparé aux méthodes d'ASP où la quantité de tensioactif est de l'ordre de 0,1 %.
La présente invention palie tous les inconvénients décrits ci-dessus.

## Description de l'invention

Il a été trouvé que, de manière surprenante, il était possible d'émulsifier l'huile en mettant en oeuvre des quantités de tensio-actif faible, en pratique de l'ordre de 0.1%, en combinant ledit tensio-actif avec une quantité inférieure de polymère fonctionnel spécifique.
Plus précisément, l'invention a pour objet un procédé de récupération assistée du pétrole, par émulsification de l'huile, consistant à :

- introduire dans l'eau d'injection une solution contenant au moins un polymère hydrosoluble muni de groupement(s) fonctionnel(s) hydrophobe(s) et un ou des agents tensio-actif portant des charges anioniques, le rapport pondéral tensio-actif / polymère étant compris entre 1 et 10, avantageusement entre 2 et 10 et la concentration en agent tensio-actif dans la solution étant supérieure à 100 ppm (partie par million), avantageusement supérieure à 500 ppm, en pratique de l'ordre de 1000 ppm,
- introduire la solution d'injection saline ou non résultante dans une formation géologique ;
- récupérer le pétrole par émulsification de l'huile ;

  caractérisé en ce que le(s) groupement(s) fonctionnel(s) hydrophobe(s) se présentent sous la forme d'au moins un monomère cationique hydrophobe. En d'autres termes, ledit polymère contient au moins un monomère cationique hydrophobe.

En d'autres termes, l'invention a pour objet un procédé de récupération assistée du pétrole mettant en oeuvre un polymère hydrosoluble contenant au moins un monomère cationique hydrophobe associé à un tensio actif dans un rapport pondéral spécifique.
Dans un mode de réalisation avantageux, la solution ne contient pas d'agent alcalin.
Dans la suite de la description et dans les revendications, par « agent alcalin », on désigne les hydroxydes ou carbonates de métal alcalino-terreux et plus généralement les agents alcalins mis en oeuvre habituellement dans le système ASP.
Dans un mode de réalisation avantageux, le rapport pondéral agent tensioactif/polymère est au moins supérieur ou égal à 2 et la concentration d'agent tensio-actif dans la solution est d'au moins 500 ppm.
En plus de l'émulsification de l'huile qui est améliorée, la sélection de ce type de composition permet également d'obtenir des temps de mise en solution courts du polymère à groupements fonctionnels de l'invention. On notera, de plus, qu'il est connu par l'homme de métier que l'utilisation conjointe d'une composition anti-mousse avec ce type de polymère a pour effet de faciliter leur mise en oeuvre, en particulier en limitant le phénomène de moussage.

### Le polymère fonctionnel comportant un ou plusieurs types de groupement(s) hydrophobe(s)

Ces polymères hydrosolubles, comportant minoritairement des motifs à caractère hydrophobe et de façon majoritaire des motifs à caractère hydrophile. Ils ont une masse moléculaire élevée et se caractérisent par le fait que lors de leurs mises en solutions, leurs groupements hydrophobes se structurent afin de limiter les interactions avec l'eau.
Les polymères utilisés par le procédé de l'invention ne nécessitent pas de développement de procédé de polymérisation particulier. Ils peuvent être obtenus par toutes les techniques de polymérisation bien connues par l'homme de métier (polymérisation en solution, polymérisation en gel, polymérisation par précipitation, polymérisation en émulsion (aqueuse ou inverse) suivie ou non d'une étape de spray drying, polymérisation en suspension, polymérisation micellaire suivie ou non d'une étape de précipitation. Ils sont de préférence obtenus par polymérisation en gel.
Les monomères fonctionnels hydrophobes utilisés pour la préparation des polymères utilisés par le procédé de l'invention doivent être, pour tout ou partie, de type cationique. Ils représentent en pratique entre 0.005 et 10 mol %,

de préférence moins de 1 mol% du polymère. Parmi les monomères fonctionnels hydrophobes cationiques, on peut citer à titre d'exemple :

- les dérivés allyliques cationiques et de formule générale :

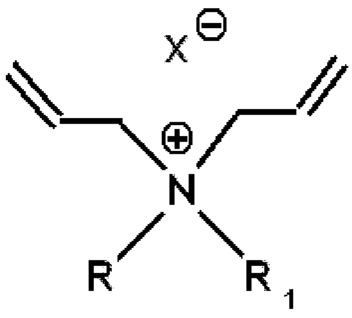

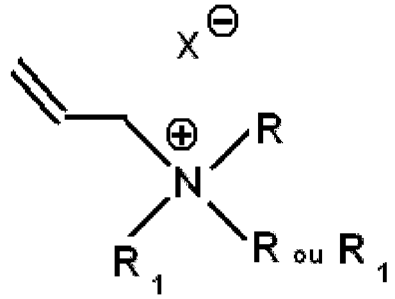

avec

R indépendamment une chaîne alkyle contenant de 1 à 4 carbones
R1 : une chaîne alkyle ou aryl-alkyle comportant de 8 à 30 carbones
X : un halogénure pouvant être bromure, chlorure, iodure, fluorure, ou n'importe quel contre ion de charge négative.

- et, de préférence, les dérivés de type (meth)acryloyle hydrophobes cationiques et de formule générale :

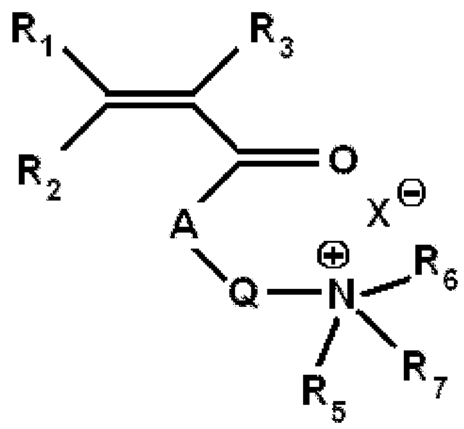

avec

A : O ou N-R4 (de préférence A = N-R4)
R1,R2,R3,R4,R5,R6 indépendamment un hydrogène ou une chaîne alkyle contenant de 1 à 4 carbones
Q : une chaîne alkyle comportant de 1 à 8 carbones
R7 : une chaîne alkyle ou aryl-alkyle comportant de 8 à 30 carbones
X : un halogénure pouvant être bromure, chlorure, iodure, fluorure, ou n'importe quel contre ion de charge négative.

Ces monomères fonctionnels hydrophobes sont généralement copolymérisés avec des monomères non ioniques et/ou éventuellement des monomères anioniques, et ou d'autres monomères hydrophobes. S'agissant de ces derniers, on peut citer à titre d'exemple les esters d'acide (meth)acrylique à chaîne alkyle, arylalkyle ou ethoxylée disponibles industriellement, les dérivés de (meth)acrylamide à chaîne alkyle, arylalkyle ou dialkyle, les monomères anioniques dérivés de (meth)acrylamide portant une chaîne hydrophobe...

En pratique, les monomères non ioniques, anioniques et autres monomères hydrophobes ci-avant listés représentent, ensemble, entre 90 et 99.995 mol% du polymère.

Les monomères anioniques utiles dans la présente invention peuvent être choisis dans un large groupe. Ces

monomères peuvent présenter des fonctionnalités acryliques, vinyliques, maléiques, fumariques, allyliques et contenir un groupe carboxy, phosphonate, sulfonate, ou un autre groupe à charge anionique, ou bien le sel d'ammonium ou de métal alcalino terreux ou de métal alcalin correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido-2-methylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, et d'ammonium.

Les monomères non ioniques utiles selon l'invention peuvent être choisis parmi les monomères vinyliques solubles dans l'eau. Des monomères préférés appartenant à cette classe incluent l'acrylamide et le méthacrylamide, le N-isopropylacrylamide, le N-N-diméthylacrylamide et le N-méthylolacrylamide. Egalement, peuvent être utilisés la N-vinylformamide, le N-vinyl acetamide, la N-vinylpyridine, le N-vinylimidazole et/ou la N-vinylpyrrolidone. Un monomère non ionique préféré sera l'acrylamide.

Le polymère fonctionnel peut présenter une structure linéaire, ramifiée, réticulée ou une architecture étoilée et/ou peigne. La masse molaire du polymère est généralement comprise entre 250 000 et 30 millions g/mol.

**Nature des composés tensio-actifs pour émulsifier l'huile**

L'agent tensio-actif (ou le mélange) est ajouté à la solution polymérique, avant, pendant ou après sa préparation.

Selon l'invention, les composés tensio-actif peuvent être anioniques, non ioniques, amphotères, zwitterioniques et/ou cationiques. Cependant, comme déjà indiqué, le(s) composé(s) tensio-actif de l'invention porte(nt) des charges anioniques.

De préférence, les composés tensioactifs utilisés sont choisis parmi les tensio-actifs anioniques et leurs zwitterions choisis dans le groupe comprenant les dérivés d'alkylsulfates, alkyléthersulfates, arylalkylsulfates, arylalkyléthersulfates, les alkylsulfonates, alkyléthersulfonates, arylalkylsulfonates les arylalkyléthersulfonates, les alkylphosphates, alkylétherphosphates, arylalkylphosphates, arylalkylétherphosphates, les alkylphosphonates, alkylétherphosphonates, arylalkylphosphonates, arylalkylétherphosphonates, les alkylcarboxylates, alkyléthercarboxylates, arylalkylcarboxylates arylalkyléthercarboxylates, les polyethers alkyles, polyethers arylalkyles...

On défini par chaine alkyle, une chaine de 6 à 24 carbones, ramifiée ou non, avec plusieurs motifs ou non, pouvant éventuellement comporter un ou plusieurs hétéroatomes (O, N, S). On défini par chaine arylalkyle, une chaîne de 6 à 24 carbones, ramifiée ou non, comportant un ou plusieurs noyaux aromatiques et pouvant éventuellement comporter un ou plusieurs hétéroatomes (O, N, S).

Les agents tensio-actifs les plus couramment utilisés, pour des raisons de coût, de stabilité, et de disponibilité, sont du type sulfonate ou sulfate, présentés sous la forme de sels de métaux alcalins ou d'ammonium.

Selon une autre caractéristique, la concentration d'utilisation de la solution polymère/tensio actif dans l'eau d'injection est d'au moins 200 ppm, avantageusement supérieure à 1000 ppm.

L'invention va maintenant être plus complètement illustrée à l'aide des exemples non limitatifs suivants, et en particulier qui ne sauraient être considérés comme se limitant aux compositions et aux formes des polymères.

## EXEMPLES

L'expérience d'émulsification consiste à mettre en solution un tensioactif, en présence ou non de polymère (associatif ou non), à différents taux de sels, de mélanger un volume de la solution aqueuse obtenue avec un volume équivalent d'huile et de laisser reposer le mélange dans un tube à essai.

Il s'agit ensuite d'observer la formation ou non d'une émulsion (phase opaque) à l'interface synonyme de solubilisation de l'huile.

**Les polymères testés**

Le polymère A (invention)

Il s'agit d'un polymère fonctionnel réalisé selon les enseignements du brevet WO 05/100423, plus particulièrement l'exemple Ag5, à savoir un copolymère réalisé par polymérisation en gel (acrylamide 74.6 mol %, acrylate de sodium 25 mol % et monomère fonctionnel cationique hydrophobe dérivé d'acrylamide 0,4 mol %).

Le polymère B

A titre comparatif, un polymère non fonctionnel (i.e. : ne contenant pas de monomère hydrophobe) de type

polyacrylamide post-hydrolysé de poids moléculaire équivalent au polymère A et de même anionicité a été utilisé.

Le polymère C

A titre comparatif, un polymère fonctionnel de type poly(acrylamide-co-AMPS®-co-n-octylacrylamide) a été synthétisé selon l'exemple 41 du brevet GB2199354. Le monomère hydrophobe est dans ce cas non ionique.

Le polymère D

A titre comparatif, un polymère fonctionnel a été synthétisé dans les mêmes conditions que le polymère A avec une composition (acrylamide 74.6 mol %, acrylate de sodium 25 mol % et 0,4 mol % d'un sulfonate de 2-acrylamido-dodécane de sodium).

**Mode opératoire**

L'agent tensioactif de type sulfonate (« ORS HF™ » commercialisé par la société OilChem) est dispersé dans de l'eau dé-ionisée pour obtenir une solution à 2%. En parallèle, 1 g de polymère est dissous dans 200 mL d'eau dé-ionisée. Une solution à 20% de chlorure de sodium est également préparée.

Les trois solutions sont mélangées afin d'obtenir 6 différentes solutions de tensioactif / polymère à différents taux de sel.

**Résultats**

Tableau : observation de la formation de l'émulsion à l'interface phase aqueuse / dodécane.

- : pas d'émulsion à l'interface
+ : émulsion à l'interface
++ : émulsion à l'interface de volume supérieur au volume de la phase dodécane restante

| Composition des solutions | Salinité en NaCl (g/l) | | | | | | | | |
|---|---|---|---|---|---|---|---|---|---|
| | 0 | 2 | 4 | 7 | 10 | 15 | 20 | 30 | 40 |
| 0.1% de tensio-actif | - | - | - | - | - | - | - | - | - |
| 1% de tensio-actif | - | - | - | - | - | + | + | + | ++ |
| 500 ppm de polymère A | - | - | - | - | - | - | - | - | - |
| 500 ppm de polymère B | - | - | - | - | - | - | - | - | - |
| 500 ppm de polymère C | - | - | - | - | - | - | - | - | - |
| 500 ppm de polymère D | - | - | - | - | - | - | - | - | - |
| 0.1% de tensio-actif + 500 ppm de polymère A | - | - | - | + | + | + | ++ | ++ | ++ |
| 0.1% de tensio-actif + 500 ppm de polymère B | - | - | - | - | - | - | - | - | - |
| 0.1% de tensio-actif + 500 ppm de polymère C | - | - | - | - | - | - | - | - | - |
| 0.1% de tensio-actif + 500 ppm de polymère D | - | - | - | - | - | - | - | - | - |

A titre indicatif, nous avons constaté que, comme cela est connu par l'homme de métier, l'utilisation conjointe d'un polymère associatif et d'un agent tensio-actif a eu pour conséquence une augmentation de la viscosité de la solution.

**Conclusion**

Il apparaît très clairement que seule la combinaison d'un polymère fonctionnel selon l'invention avec un composé tensio-actif permet d'observer l'émulsification à l'interface à 0.1% de tensioactif.

$$\text{Pour un rapport en poids : } \frac{\text{quantité de tensioactif(s)}}{\text{quantité de polymère(s)}}$$

de 2 (0,1% divisé par 500 ppm), cette association s'avère plus efficace qu'une quantité 10 fois plus importante de tensioactif seul.

De plus, contrairement à ce que pouvait penser l'homme de métier, la présence de charges cationiques sur les monomères portant les groupement(s) fonctionnel(s) hydrophobe(s) n'a pas d'effet négatif mais au contraire améliore les performances du polymère fonctionnel.

**Revendications**

**1.** Procédé de récupération assistée du pétrole, par émulsification de l'huile, consistant à :

- introduire dans l'eau d'injection une solution contenant au moins un polymère et un ou des agents tensioactifs portant des charges anioniques, le rapport pondéral tensio-actif / polymère étant compris entre 1 et 10 et la concentration en agent tensio-actif dans la solution étant supérieure à 100 ppm ;
- introduire la solution d'injection saline ou non résultante dans une formation géologique ;
- récupérer le pétrole par émulsification de l'huile ;

***caractérisé* en ce que** ledit polymère contient au moins un monomère cationique hydrophobe.

**2.** Procédé selon la revendication 1, ***caractérisé* en ce que** la concentration en agent tensio-actif dans la solution est supérieure à 100ppm et inférieure ou égale à 5000 ppm.

**3.** Procédé selon la revendication 1, ***caractérisé* en ce que** la concentration en agent tensio-actif dans la solution est comprise entre 1000 et 5000 ppm.

**4.** Procédé selon la revendication 1, ***caractérisé* en ce que** le rapport pondéral agent tensioactif/polymère est supérieur ou égal à 2 et la concentration d'agent tensio-actif dans la solution est supérieure ou égale à 500 ppm.

**5.** Procédé selon la revendication 1, ***caractérisé* en ce que** les monomères cationiques hydrophobes représentent entre 0.005 et 10 mol% du polymère.

**6.** Procédé selon la revendication 5, ***caractérisé* en ce que** les monomères cationiques sont choisis parmi :

- les dérivés allyliques cationiques et de formule générale :

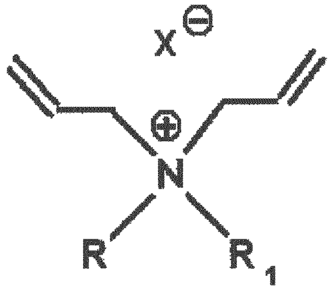

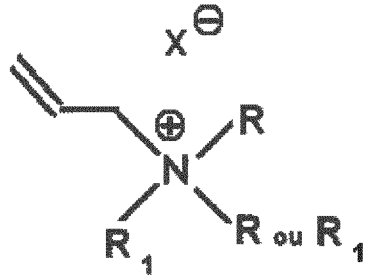

avec

R indépendamment une chaîne alkyle contenant de 1 à 4 carbones
R1 : une chaîne alkyle ou aryl-alkyle comportant de 8 à 30 carbones
X : un halogénure pouvant être bromure, chlorure, iodure, fluorure, ou n'importe quel contre ion de charge négative.

- et, de préférence, les dérivés de type (meth)acryloyle hydrophobes cationiques et de formule générale :

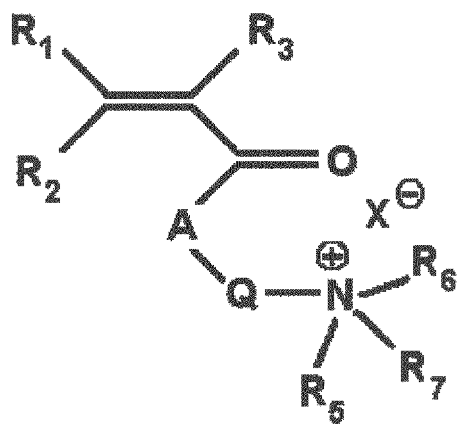

avec

A : O ou N-R4 (de préférence A = N-R4) R1,R2,R3,R4,R5,R6 indépendamment un hydrogène ou une chaîne alkyle contenant de 1 à 4 carbones
Q : une chaîne alkyle comportant de 1 à 8 carbones

R7 : une chaîne alkyle ou aryl-alkyle comportant de 8 à 30 carbones

X : un halogénure pouvant être bromure, chlorure, iodure, fluorure, ou n'importe quel contre ion de charge négative.

**7.** Procédé selon la revendication 1, ***caractérisé* en ce que** les monomères cationiques hydrophobes sont copolymérisés avec des monomères non ioniques et/ou éventuellement des monomères anioniques, et/ou des monomères hydrophobes choisis dans le groupe comprenant les esters d'acide (meth)acrylique à chaîne alkyle, arylalkyle ou ethoxylée, les dérivés de (meth)acrylamide à chaîne alkyle, arylalkyle ou dialkyle, les monomères anioniques dérivés de (meth)acrylamide portant une chaîne hydrophobe.

**8.** Procédé selon la revendication 7, ***caractérisé* en ce que** les monomères non ioniques sont choisis dans le groupe comprenant l'acrylamide et le méthacrylamide, le N-isopropylacrylamide, le N-N-diméthylacrylamide et le N-méthylolacrylamide. la N-vinylformamide, le N-vinyl acetamide, la N-vinylpyridine, le N-vinylimidazole et/ou la N-vinylpyrrolidane.

**9.** Procédé selon la revendication 7, ***caractérisé* en ce que** les monomères anioniques sont choisis dans le groupe comprenant l'acide acrylique, l'acide méthacrylique, l'acide itaconique, l'acide crotonique, l'acide maléique, l'acide fumarique, l'acide 2-acrylamido-2-methylpropane sulfonique, l'acide vinylsulfonique, l'acide vinylphosphonique, l'acide allylsulfonique, l'acide allylphosphonique, l'acide styrène sulfonique.

**10.** Procédé selon la revendication 1, ***caractérisé* en ce que** l'agent tensio-actif est anionique, amphotèrique ou zwitterionique et choisi dans le groupe comprenant les dérivés d'alkylsulfates, alkyléthersulfates, arylalkylsulfates, arylalkyléthersulfates, les alkylsulfonates, alkyléthersulfonates, arylalkylsulfonates les arylalkyléthersulfonates, les alkylphosphates, alkylétherphosphates, arylalkylphosphates, arylalkylétherphosphates, les alkylphosphonates, alkylétherphosphonates, arylalkylphosphonates, arylalkylétherphosphonates, les alkylcarboxylates, alkyléthercarboxylates, arylalkylcarboxylates arylalkyléthercarboxylates, les polyethers alkyles, polyethers arylalkyles.

**11.** Procédé selon la revendication 1, ***caractérisé* en ce que** la concentration de la solution polymère/agent tensio actif dans l'eau d'injection est d'au moins 200 ppm, de préférence supérieure à 1000 ppm.

**12.** Procédé selon la revendication 1, ***caractérisé* en ce que** la solution ne contient pas d'agent alcalin de type hydroxyde ou de carbonate de métal alcalino-terreux.

## Patentansprüche

1. Verfahren zur erhöhten Gewinnung von Erdöl durch Emulgieren des Öls, Folgendes umfassend:

   - Einführen einer mindestens ein Polymer und ein Tensid oder Tenside mit anionischen Ladungen enthaltenden Lösung in das Injektionswasser, wobei das Gewichtsverhältnis Tensid / Polymer zwischen 1 und 10 liegt und die Tensidkonzentration in der Lösung höher als 100 ppm ist;
   - Einführen der resultierenden, salzhaltigen oder nicht salzhaltigen, Injektionslösung in eine geologische Formation;
   - Gewinnen des Erdöls durch Emulgieren des Öls;

   ***dadurch gekennzeichnet*, dass** das Polymer mindestens ein hydrophobes kationisches Monomer enthält.

2. Verfahren nach Anspruch 1, ***dadurch gekennzeichnet*, dass** die Tensidkonzentration in der Lösung höher als 100 ppm und niedriger als oder gleich 5000 ppm ist.

3. Verfahren nach Anspruch 1, ***dadurch gekennzeichnet*, dass** die Tensidkonzentration in der Lösung zwischen 1000 und 5000 ppm liegt.

4. Verfahren nach Anspruch 1, ***dadurch gekennzeichnet*, dass** das Gewichtsverhältnis Tensid / Polymer größer als oder gleich 2 und die Tensidkonzentration in der Lösung höher als oder gleich 500 ppm ist.

5. Verfahren nach Anspruch 1, ***dadurch gekennzeichnet*, dass** die hydrophoben kationischen Monomere zwischen 0,005 und 10 Mol% des Polymers darstellen.

6. Verfahren nach Anspruch 5, ***dadurch gekennzeichnet*, dass** die kationischen Monomere ausgewählt sind aus:

   - den kationischen Allylderivaten der allgemeinen Formel:

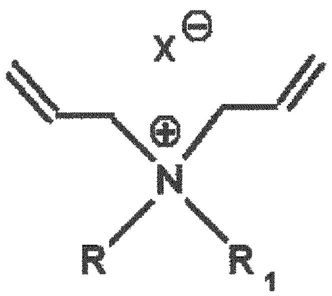

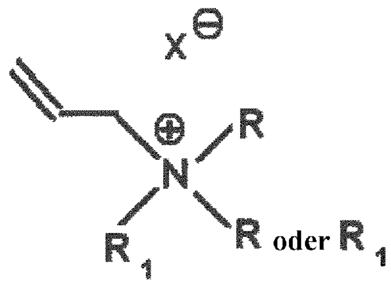

wobei

R unabhängig eine Alkylkette mit 1 bis 4 Kohlenstoffen ist
R1 eine Alkyl- oder Arylalkylkette mit 8 bis 30 Kohlenstoffen ist
X ein Halogenid ist, das Bromid, Chlorid, Iodid, Fluorid oder ein beliebiges Gegenion mit negativer Ladung sein kann.

- und, vorzugsweise, die kationischen hydrophoben Derivate vom Typ (Meth)Acryloyl der allgemeinen Formel sind:

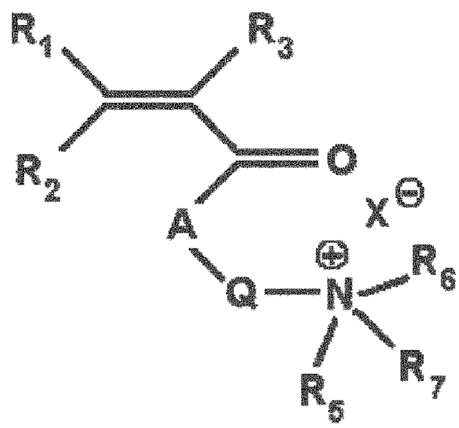

wobei

A O oder N-R4 (vorzugsweise A = N-R4) ist
R1,R2,R3,R4,R5,R6 unabhängig ein Wasserstoff oder eine 1 bis 4 Kohlenstoffe enthaltende Alkylkette sind
Q eine Alkylkette mit 1 bis 8 Kohlenstoffen ist
R7 eine Alkyl- oder Arylalkylkette mit 8 bis 30 Kohlenstoffen ist
X ein Halogenid ist, das Bromid, Chlorid, Iodid, Fluorid oder ein beliebiges Gegenion mit negativer Ladung sein kann.

**7.** Verfahren nach Anspruch 1, ***dadurch gekennzeichnet,*** **dass** die hydrophoben kationischen Monomere mit nichtionischen Monomeren und/oder gegebenenfalls anionischen Monomeren und/oder hydrophoben Monomeren ausgewählt aus der Gruppe, umfassend (Meth)Acrylsäureester mit einer Alkyl-, Arylalkylkette oder einer ethoxylierten Kette, Derivate von (Meth)Acrylamid mit Alkyl-, Arylalkyl- oder Dialkylkette, von (Meth)Acrylamid abgeleitete anionische Monomere mit hydrophober Kette, copolymerisiert sind.

**8.** Verfahren nach Anspruch 7, ***dadurch gekennzeichnet,*** **dass** die nichtionischen Monomere ausgewählt sind aus der Gruppe, umfassend Acrylamid und Methacrylamid, N-Isopropylacrylamid, N-N-Dimethylacrylamid und N-Methylolacrylamid, N-Vinylformamid, N-Vinylacetamid, N-Vinylpyridin, N-Vinylimidazol und/oder N-Vinylpyrrolidon.

**9.** Verfahren nach Anspruch 7, ***dadurch gekennzeichnet*****, dass** die anionischen Monomere ausgewählt sind aus der Gruppe, umfassend Acrylsäure, Methacrylsäure, Itaconsäure, Crotonsäure, Maleinsäure, Fumarsäure, 2-Acrylamido-2-methylpropansulfonsäure, Vinylsulfonsäure, Vinylphosphonsäure, Allylsulfonsäure, Allylphosphonsäure, Styrolsulfonsäure.

**10.** Verfahren nach Anspruch 1, ***dadurch gekennzeichnet*****, dass** das Tensid anionisch, amphoterisch oder zwitterionisch ist und ausgewählt aus der Gruppe, umfassend die Derivate der Alkylsulfate, Alkylethersulfate, Arylalkylsulfate, Arylalkylethersulfate, die Alkylsulfonate, Alkylethersulfonate, Arylalkylsulfonate, die Arylalkylethersulfonate, Alkylphosphate, Alkyletherphosphate, Arylalkylphosphate, Arylalkyletherphosphate, die Alkylphosphonate, Alkyletherphosphonate, Arylalkylphosphonate, Arylalkyletherphosphonate, die Alkylcarboxylate, Alkylethercarboxylate, Arylalkylcarboxylate, Arylalkylethercarboxylate, die Alkylpolyether, Arylalkylpolyether.

**11.** Verfahren nach Anspruch 1, ***dadurch gekennzeichnet*****, dass** die Konzentration der Polymer/Tensid-Lösung im Injektionswasser mindestens 200 ppm, vorzugsweise höher als 1000 ppm ist.

**12.** Verfahren nach Anspruch 1, ***dadurch gekennzeichnet*****, dass** die Lösung kein alkalisches Mittel vom Hydroxidtyp oder Erdalkalimetallcarbonat enthält.

## Claims

**1.** Process for enhanced oil recovery, in practice by emulsification of the oil, consisting in:

- introducing into the injection water a solution containing at least one polymer and at least one surfactant having

anionic charges, the surfactant/polymer weight ratio being between 1 and 10 and the surfactant concentration in the solution being higher than 100 ppm;
- introducing into a geological formation the resulting injection solution, saline or not;
- recovering the crude oil by emulsification the oil,
**characterized in that** the polymer contains at least one hydrophobic cationic monomer.

2. Process according to Claim 1, **characterized in that** the surfactant concentration in the solution is higher than 100 ppm and less than or equal to 5000 ppm.

3. Process according to Claim 1, **characterized in that** the surfactant concentration in the solution is between 1000 ppm and 5000 ppm.

4. Process according to Claim 1, **characterized in that** the surfactant/polymer weight ratio is equal to or higher than 2 and the surfactant concentration in the solution is equal to or higher than 500 ppm.

5. Process according to Claim 1, **characterized in that** the hydrophobic cationic monomers account for between 0.005 and 10 mol % of the polymer.

6. Process according to Claim 5, **characterized in that** the cationic monomers are selected from:

- cationic allyl derivatives having the general formula:

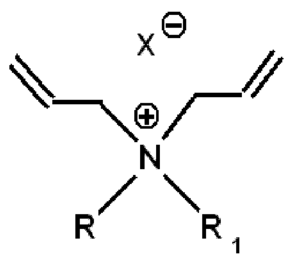

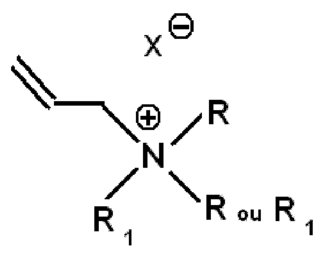

where

R: independently an alkyl chain containing 1 to 4 carbons
R1: an alkyl or arylalkyl chain comprising 8 to 30 carbons X: a halide which may be a bromide, chloride, iodide, fluoride, or any negatively charged counter-ion,

- and, preferably, the hydrophobic cationic derivatives of the methacryloyl type having the general formula:

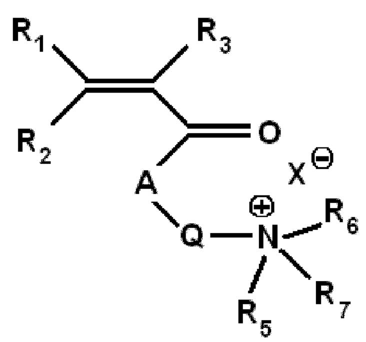

where

A: O or N-R4 (preferably A = N-R4)
R1, R2, R3, R4, R5, R6: independently a hydrogen or an alkyl chain containing 1 to 4 carbons
Q: an alkyl chain comprising 1 to 8 carbons
R7: an alkyl or arylalkyl chain comprising 8 to 30 carbons

X: a halide which may be a bromide, chloride, iodide, fluoride, or any negatively charged counter-ion.

7. Process according to Claim 1, **characterized in that** the hydrophobic cationic monomers are copolymerized with nonionic monomers and/or optionally anionic monomers and/or hydrophobic monomers selected from the group comprising esters of methacrylic acid having an alkyl, arylalkyl or ethoxylated chain, methacrylamide derivatives having an alkyl, arylalkyl or dialkyl chain, anionic monomers derived from methacrylamide having a hydrophobic chain.

8. Process according to Claim 7, **characterized in that** the nonionic monomers are selected from the group comprising acrylamide and methacrylamide, N-isopropylacrylamide, N-N-dimethylacrylamide and N-methylolacrylamide, N-vinylformamide, N-vinyl acetamide, N-vinylpyridine, N-vinylimidazole and/or N-vinylpyrrolidone.

9. Process according to Claim 7, **characterized in that** the anionic monomers are selected from the group comprising acrylic acid, methacrylic acid, itaconic acid, crotonic acid, maleic acid, fumaric acid, 2-acrylamido-2-methylpropane sulphonic acid, vinylsulphonic acid, vinylphosphonic acid, allyl sulphonic acid, allyl phosphonic acid, styrene sulphonic acid.

10. Process according to Claim 1, **characterized in that** the surfactant is anionic, amphoteric or zwitterionic and selected from the group comprising derivatives of alkylsulphates, alkylethersulphates, arylalkylsulphates, arylalkylethersulphates, alkylsulphonates, alkylethersulphonates, arylalkylsulphonates, arylalkylethersulphonates, alkylphosphates, alkyletherphosphates, arylalkylphosphates, arylalkyletherphosphates, alkylphosphonates, alkyletherphosphonates, arylalkylphosphonates, arylalkyletherphosphonates, alkylcarboxylates, alkylethercarboxylates, arylalkylcarboxylates, arylalkylethercarboxylates, alkyl polyethers, arylalkyl polyethers.

11. Process according to Claim 1, **characterized in that** the concentration of polymer/surfactant solution in the injection water is at least 200 ppm, preferably higher than 1000 ppm.

12. Process according to Claim 1, **characterized in that** the solution does not contain an alkaline agent of the hydroxide type or alkaline-earth metal carbonate.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4814096 A
- GB 2199354 A
- WO 05100423 A